# EUROPEAN PATENT SPECIFICATION

(11) **EP 4 312 415 B1**
(45) Date of publication and mention of the grant of the patent: **03.09.2025**
(21) Application number: 23185500.8
(22) Date of filing: 14.07.2023
(51) Int. Cl.: H04L 67/51, H04L 67/12, H04W 84/18

(54) **METHOD, APPARATUS AND SYSTEM FOR AUTOMATIC CONFIGURATION OF A LORA PRIVATE NETWORK IN A GAS DETECTION SYSTEM**
VERFAHREN, VORRICHTUNG UND SYSTEM ZUR AUTOMATISCHEN KONFIGURATION EINES PRIVATEN LORA-NETZWERKS IN EINEM GASDETEKTIONSSYSTEM
PROCÉDÉ, APPAREIL ET SYSTÈME DE CONFIGURATION AUTOMATIQUE D'UN RÉSEAU PRIVÉ LORA DANS UN SYSTÈME DE DÉTECTION DE GAZ

(30) Priority: 25.07.2022 CN 202210876504
(43) Date of publication of application: 31.01.2024
(73) Proprietor: Honeywell International Inc., Charlotte, NC 28202 (US)
(72) Inventor: LIU, Li, Charlotte, 28202 (US); ZHAO, Pengjun, Charlotte, 28202 (US); HUANG, Fan, Charlotte, 28202 (US); WANG, Kai, Charlotte, 28202 (US); WU, Wei, Charlotte, 28202 (US)
(74) Representative: Haseltine Lake Kempner LLP

(56) References cited:
- CN-A- 102 448 117
- US-B2- 8 699 377

## Description

### FIELD OF THE INVENTION

The present disclosure relates generally to a network architecture, and more particularly, to establishing a long range (LoRa) private network for devices within a gas detection system.

### BACKGROUND

LoRa is a spread spectrum modulation technique derived from chirp spread spectrum (CSS) technology. LoRa devices and wireless radio frequency technology is a long range, low power wireless platform that has become the de facto technology for Internet of Things (IoT) networks worldwide.

US8699377 B2 discloses data structures, communication protocol formats and process Rows for controlling and facilitating secure communications between the nodes of a mesh network, such as utility meters and gateway nodes comprising a utility network. The enabled processes include association, information exchange, route discovery and maintenance and the like for instituting and maintaining a secure mesh network.

### BRIEF SUMMARY

Various embodiments described herein relate to methods, apparatuses, and systems for establishing various communication networks of devices within a gas detection system. The present invention is defined in the independent claims, to which reference should now be made. Advantageous features are set out in the sub claims.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein.
FIG. 1 illustrates an example controller component in accordance with various embodiments of the present disclosure.
FIG. 2 illustrates an example diagram of various components of an example gas detection system in accordance with various embodiments of the present disclosure.
FIG. 3 illustrates a diagram of an exemplary tree network architecture according to various embodiments of the present disclosure.
FIG. 4 illustrates a flowchart diagram of a method for handling child node connection request by a gateway according to various embodiments of the present disclosure.
FIG. 5 illustrates a flowchart diagram of a method for soliciting to join a tree network according to various embodiments of the present disclosure.
FIG. 6 illustrates a flowchart diagram of a method for handling child node connection requests by a router according to various embodiments of the present disclosure.
FIG. 7 illustrates an example diagram of broadcasting beacon requests in a tree network according to various embodiments of the present disclosure.
FIG. 8 illustrates an example diagram of transmitting beacon responses in a tree network according to various embodiments of the present disclosure.
FIG. 9 illustrates an example diagram of transmitting join requests in a tree network according to various embodiments of the present disclosure.
FIG. 10 illustrates an example diagram of joining devices to a tree network according to various embodiments of the present disclosure.
FIG. 11 illustrates a tree network diagram of exemplary node addresses for data transmission and routing according to various embodiments of the present disclosure.
FIG. 12 illustrates exemplary upstream transmission frames according to various embodiments of the present disclosure.
FIG. 13 illustrates exemplary downstream transmission frames according to various embodiments of the present disclosure.
FIG. 14 illustrates a diagram of exemplary network mode switching according to various embodiments of the present disclosure.
FIG. 15 illustrates an example gas detection system configured in a parallel network according to some embodiments of the present disclosure.
FIG. 16 illustrates an example flow diagram illustrating an exemplary method of handling frame broadcasts according to some embodiments of the present disclosure.
FIG. 17 illustrates a diagram of broadcasting devices in a parallel network according to various embodiments of the present disclosure.
FIG. 18, illustrates a diagram of exemplary network mode switching according to various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such component or feature may be optionally included in some embodiments, or it may be excluded.

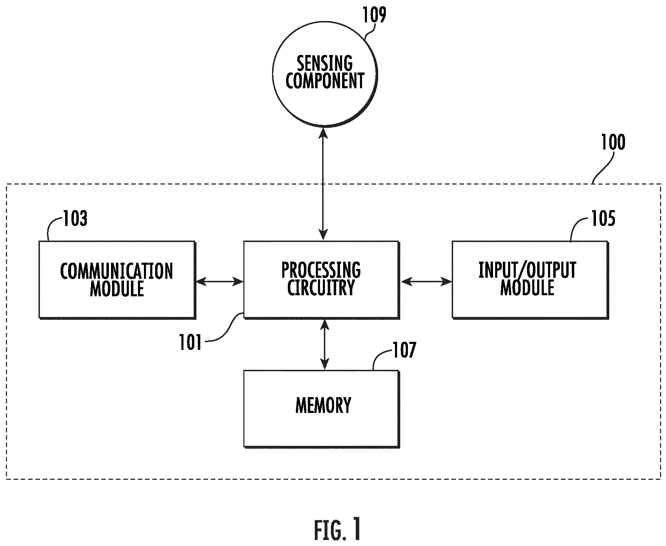

Referring now to FIG. 1, a schematic diagram depicting an example controller component 100 of an example gas detection device in accordance with various embodiments of the present disclosure. As shown, the controller component 100 comprises processing circuitry 101, a communication module 103, input/output module 105, a memory 107 and/or other components configured to perform various operations, procedures, functions or the like described herein.

As shown, the controller component 100 (such as the processing circuitry 101, communication module 103, input/output module 105 and memory 107) is electrically coupled to and/or in electronic communication with a sensing component 109. As depicted, the sensing component 109 may exchange (e.g., transmit and receive) data with the processing circuitry 101 of the controller component 100. For example, sensing component 109 may generate a gas detection indication and transmit the gas detection indication to the processing circuitry 101.

The processing circuitry 101 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 101 may comprise one or more processors. In one exemplary embodiment, the processing circuitry 101 is configured to execute instructions stored in the memory 107 or otherwise accessible by the processing circuitry 101. When executed by the processing circuitry 101, these instructions may enable the controller component 100 to execute one or a plurality of the functions as described herein. No matter whether it is configured by hardware, firmware/software methods, or a combination thereof, the processing circuitry 101 may comprise entities capable of executing operations according to the embodiments of the present invention when correspondingly configured. Therefore, for example, when the processing circuitry 101 is implemented as an ASIC, an FPGA, or the like, the processing circuitry 101 may comprise specially configured hardware for implementing one or a plurality of operations described herein. Alternatively, as another example, when the processing circuitry 101 is implemented as an actuator of instructions (such as those that may be stored in the memory 107), the instructions may specifically configure the processing circuitry 101 to execute one or a plurality of algorithms and operations described herein.

The memory 107 may comprise, for example, a volatile memory, a non-volatile memory, or a certain combination thereof. Although illustrated as a single memory in FIG. 1, the memory 107 may comprise a plurality of memory components. In various embodiments, the memory 107 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 107 may be configured to store information, data, application programs, instructions, and etc., so that the controller component 100 can execute various functions according to the embodiments of the present disclosure. For example, in at least some embodiments, the memory 107 is configured to cache input data for processing by the processing circuitry 101. Additionally, or alternatively, in at least some embodiments, the memory 107 is configured to store program instructions for execution by the processing circuitry 101. The memory 107 may store information in the form of static and/or dynamic information. When the functions are executed, the stored information may be stored and/or used by the controller component 100.

The communication module 103 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 107) and executed by a controller component 100 (for example, the processing circuitry 101). In some embodiments, the communication module 103 (as with other components discussed herein) may be at least partially implemented as the processing circuitry 101 or otherwise controlled by the processing circuitry 101. In this regard, the communication module 103 may communicate with the processing circuitry 101, for example, through a bus. The communication module 103 may comprise, for example, antennas, transmitters, receivers, transceivers, network interface cards and/or supporting hardware and/or firmware/software, and is used for establishing communication with another apparatus. The communication module 103 may be configured to receive and/or transmit any data that may be stored by the memory 107 by using any protocol that can be used for communication between apparatuses. The communication module 103 may additionally or alternatively communicate with the memory 107, the input/output module 105 and/or any other component of the controller component 100, for example, through a bus.

In some embodiments, the controller component 100 may comprise an input/output module 105. The input/output module 105 may communicate with the processing circuitry 101 to receive instructions input by the user and/or to provide audible, visual, mechanical or other outputs to the user. Therefore, the input/output module 105 may comprise supporting devices, such as a keyboard, a mouse, a display, a touch screen display, and/or other input/output mechanisms. Alternatively, at least some aspects of the input/output module 105 may be implemented on a device used by the user to communicate with the controller component 100. The input/output module 105 may communicate with the memory 107, the communication module 103 and/or any other component, for example, through a bus. One or a plurality of input/output modules and/or other components may be included in the controller component 100.

According to various embodiments, the disclosed gas detection device may be deployed for real-time remote monitoring of potentially hazardous environments. For example, the disclosed gas detection device may be used where it is critical to maintain visibility on gas threats, such as protecting industrial workers and first responders, or establishing a perimeter during a hazmat event. In some embodiments, a plurality of the disclosed gas detection device may be configured in a network to communicate with each other as well as to support long-distance remote monitoring. Thus, there is a need for a network scheme that provides stability, security, and support group alarm function.

In accordance with various examples of the present disclosure, a gas detection network is provided for a plurality of the disclosed gas detection device for communication. The gas detection network may comprise a LoRa private network comprising two network topology modes of operation. As an example, the gas detection network may allow the plurality of the disclosed gas detection device to communicate using LoRa in either a tree network mode or a parallel network mode. The plurality of the disclosed gas detection device may switch between the tree network mode and the parallel network mode based on a presence of a gateway. That is, the plurality of the disclosed gas detection device, when configured in a tree network mode, may go offline and enable broadcasting to establish a parallel network based on a removal (e.g., failure, loss connection, out-of-range, offline) of a gateway device from the tree network. Conversely, the plurality of the disclosed gas detection device, when configured in a parallel network mode, may stop broadcasting and join a tree network based on an addition or connection of a gateway device to the gas detection network.

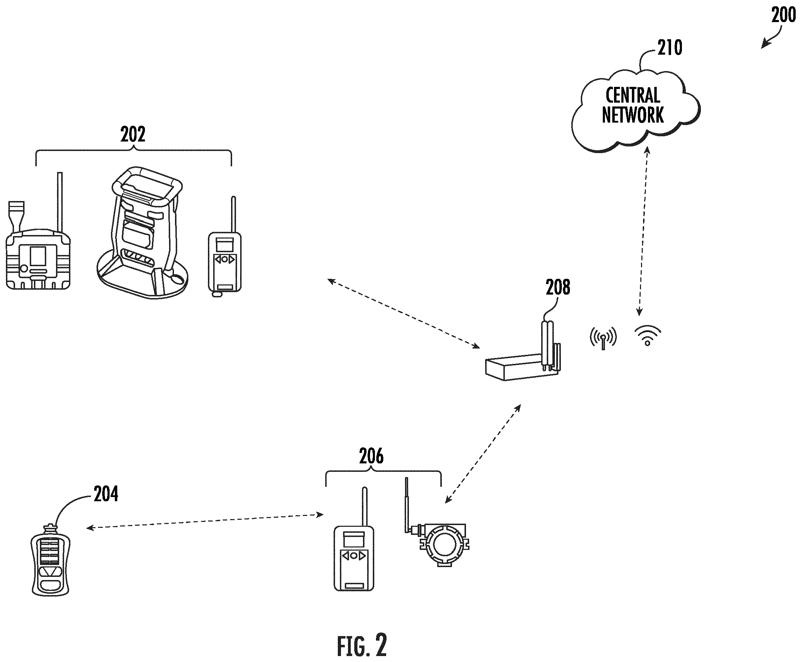

Referring now to FIG. 2, an example gas detection system is shown. In particular, FIG. 2 depicts a gas detection system 200 including various components connected in a LoRa private network according to various embodiments disclosed herein. The gas detection system 200 comprises gas detection devices 202 and 204, routers 206, gateway 208, and central network 210. In the illustrated embodiment, gas detection devices 202 and 204, routers 206, and gateway 208 may be connected in a LoRa private network according to a tree network mode. Gas detection devices 202 and 204 may include data transmission functionality for communicating with routers 206 or gateway 208.

Routers 206 may comprise wireless infrastructure devices that can operate as an access point to communicate and deliver data within the LoRa private network, such as between gas detection devices 202, 204, and gateway 208. In some embodiments, routers 206 may include functionalities of the disclosed gas detection device. According to another embodiment, routers 206 may comprise a dedicated device for relaying wireless signals. As an example, routers 206 may operate as range extender to increase wireless transmission distances of gas detection devices 202 and 204. Routers 206 may support multi-hop routing to provide better network coverage and enhance connection stability. The routers 206 may also manage data routes of child node devices (e.g., gas detection device 204) in the tree network mode and can trigger alarm notification devices.

Gateway 208 may comprise a network device that connects the LoRa private network portion of gas detection system 200 (e.g., gas detection devices 202, 204, routers 206, and gateway 208 itself) to central network 210. The gateway 208 may include hardware, such as network interface cards, and software for interfacing communications from the LoRa private network to the central network 210. The gateway 208 may also manage data routes of all child node devices and branches (e.g., gas detection devices 202, 204, and routers 206) in the tree network mode.

Central network 210 may comprise an endpoint of which gas detection devices 202, 204, routers 206, and gateway 208 may ultimately communicate with. For example, real-time detection data from gas detection devices 202, 204, and routers 206 may be propagated to the central network 210 through various layer nodes (e.g., from bottom layer to top layer) of the LoRa private network.

According to some embodiments, the central network 210 may be coupled to a remote server to provide centralized monitoring of data received from devices connected in the LoRa private network, such as real-time threat readings, alarm status, location of each device. As an example, central network 210 may receive detection readings and location data of gas detection devices 202, 204, and routers 206 and monitor the status of gas detection devices 202, 204, and routers 206. Accordingly, access to real-time data, and location of gas detection devices 202, 204, and routers 206 may be used to monitor workers as well as determine location and severity of a threat.

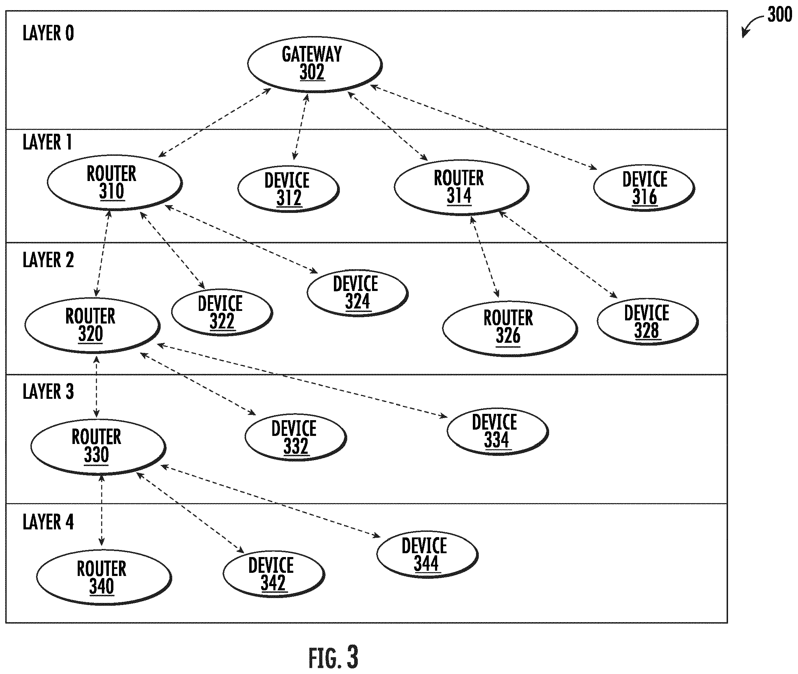

As discussed above, devices within a gas detection system may be connected to a LoRa private network based on a tree network configuration. FIG. 3 presents a diagram of an exemplary tree network architecture according to various embodiments of the present disclosure. The illustrated embodiment comprises a tree network 300 comprising nodes belonging to a plurality of layers, Layers 0 through 4. Each layer includes nodes representative of gas detection devices, routers, and a gateway that are connected according to a tree hierarchy. The layers may represent parent child node relationships of the gas detection devices, routers, and gateway. Parent and child node connections may be established based on one or more factors, such as functionality, capability, distance, signal strength, or network traffic load. In various embodiments of the present disclosure, the top-most layer, such as Layer 0, is assigned to a gateway.

Layer 0 comprises gateway 302. Gateway 302 is directly connected to child nodes in Layer 1 comprising router 310, gas detection device 312, router 314, and gas detection device 316. Router 310 and router 314 are further connected to child nodes in Layer 2. In particular, router 310 is directly connected to router 320, gas detection device 322, and gas detection device 324 and router 314 is directed connected to router 326 and gas detection device 328. Router 320 is further connected to child nodes in Layer 3 comprising router 330, gas detection device 332, and gas detection device 334. Router 330 is further connected to child nodes in Layer 4 comprising router 340, gas detection device 342, and gas detection device 344.

The gateway 302 and routers 310, 314, 320, 326, 330, and 340 may have certain attributes, for example, as depicted in Table 1.

**Table 1**

| **Layer** | **Capability** | **RTR_Alloc** | **RTR_MAX** | **RTR MAX num in layer** |
|---|---|---|---|---|
| **0** | 192 | 17 | 8 | 0 |
| **1** | 16 | 6 | 2 | 8 |
| **2** | 5 | 3 | 1 | 16 |
| **3** | 2 | 1 | 0 | 16 |
| **4** | 0 | 0 | 0 | 0 |

A "Capability" attribute may be allocated to gateway and routers. Capability may comprise a resource quantity representative of a gateway's or router's capacity for accepting child node connections with a router or gas detection device based on layer level. Capability of routers may be allocated by its parent node (either a gateway or a router) when connected. The gateway 302 being the root node may be pre-allocated a given amount of capability. Generally, gateway/routers in higher layers of the tree network 300 are allocated with greater capability than routers in lower layers. For example, gateway 302 in Layer 0 is allocated a greatest amount of capability ('192'), while router 340 in Layer 4 is allocated with no capability.

A parent router may accept connections from child node routers or gas detection devices. Additionally, when a child router connects to a parent node, capability of the parent may be allocated to the child router. The "RTR_Alloc" attribute may comprise a capability cost if a router was connected to a parent node at a given layer. If a parent node has enough capability (e.g., capability > RTR_Alloc), capability equal to the RTR_Alloc can be allocated from the parent node's remaining capability to a child router. However, if the parent node has a remaining capability greater than '1' but less than RTR_Alloc, the remaining capability may be allocated to the child router. A gateway or router may accept connections until its capability is exhausted. That is, capability may be allocated for every device connection until the capability is exhausted (i.e., capability = 0). The "RTR_MAX" attribute may define a maximum amount of child routers allowed to connect to a parent node at a given layer. In certain instances, such as in the illustrated embodiment, router 340 may be allowed to connect to router 330 having a RTR_MAX = 0 provided that router 340 is configured as a detector device and does not function as a router. The "RTR MAX num in layer" attribute may define a maximum number of routers in a given layer.

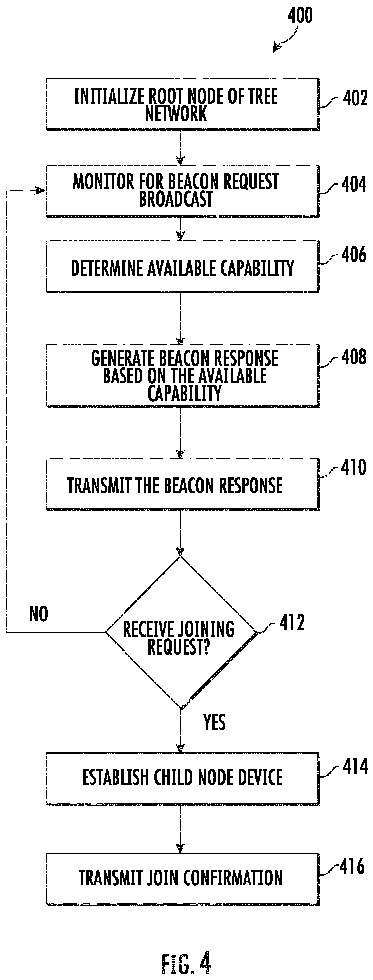

Referring now to FIG. 4, FIG. 5, and FIG. 6, example flow diagrams illustrating exemplary methods of setting up a tree network in accordance with some example embodiments of the present disclosure is provided. It is noted that each block of a flowchart, and combinations of blocks in the flowcharts, may be implemented by various means such as hardware, firmware, circuitry and/or other devices associated with execution of software including one or more computer program instructions. For example, one or more of the steps/operations described in FIG. 4, FIG. 5, and FIG. 6 may be embodied by computer program instructions, which may be stored by a non-transitory memory of an apparatus employing an embodiment of the present disclosure and executed by a processor component in an apparatus (such as, but not limited to, a gas detection device, a router, a gateway, a programable processor, a client computing device, a remote computing server, and/or the like). For example, these computer program instructions may direct the processor component to function in a particular manner, such that the instructions stored in the computer-readable storage memory produce an article of manufacture, the execution of which implements the function specified in the flowchart block(s).

In FIG. 4, the example method 400 may be executed by a computing device associated with a gateway for handling child node connection requests from broadcasting devices requesting to join a tree network according to some embodiments of the present disclosure. According to various embodiments described herewith, the requests to join the tree network may be in response to a detection of the gateway. As an example, the broadcasting devices may switch over from a parallel network configuration to a tree network configuration.

At step 402, a root node of a tree network is initialized by the computing device. The root node may comprise a node device that is designated as a destination of data communications from all other node devices in the tree network. As an example, the computing device may function as a destination device node where child node devices may communicate data to, either directly or via intermediate device nodes. The computing device may manage data routes of all child node devices and branches in the tree network.

The tree network may comprise, for example, a network of devices capable of wireless communication within a gas detection system. In some embodiments, the tree network may comprise a LoRa private network, or any local area computer network that uses a private address space of Internet Protocol addresses. The computing device may connect the tree network to another network external to the tree network, such as a central network.

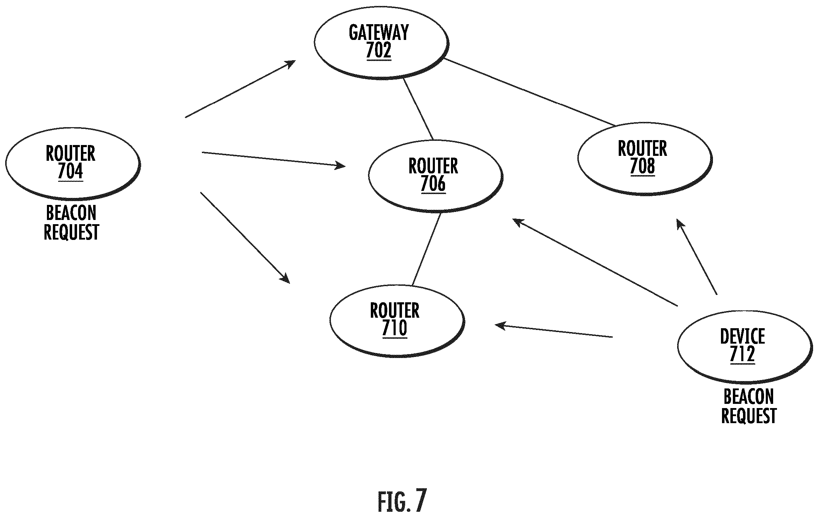

In some embodiments, subsequent to step 402, the example method proceeds to step 404, where the computing device monitors for a beacon request broadcast. Monitoring for the beacon request broadcast may comprise detecting a beacon request broadcast from a broadcasting device. The beacon request may comprise a request, from a broadcasting device, for devices with available capability to connect with the broadcasting device. A beacon request may be broadcasted from, for example, either a gas detection device or a router that is switching over from a parallel network configuration and searching for a parent node device to connect with in order to join the tree network. FIG. 7 presents an exemplary depiction of a gateway 702 monitoring for a beacon request broadcasted from router 704.

Referring back to FIG. 4, in some embodiments, subsequent to step 404, the example method proceeds to step 406, where the computing device determines available capability to support a connection with the broadcasting device. Capability may comprise a resource quantity representative of the computing device's (i.e., gateway's) capacity for accepting child node device connections. The computing device may be pre-allocated a given amount of capability which may be further allocated from the computing device to child node devices. Determining available capability may further comprise determining a child node device type corresponding to the broadcasting device. Different types of child node devices may require different amounts of capability. For example, a connection with a router may require greater capability from the computing device than a gas detection device.

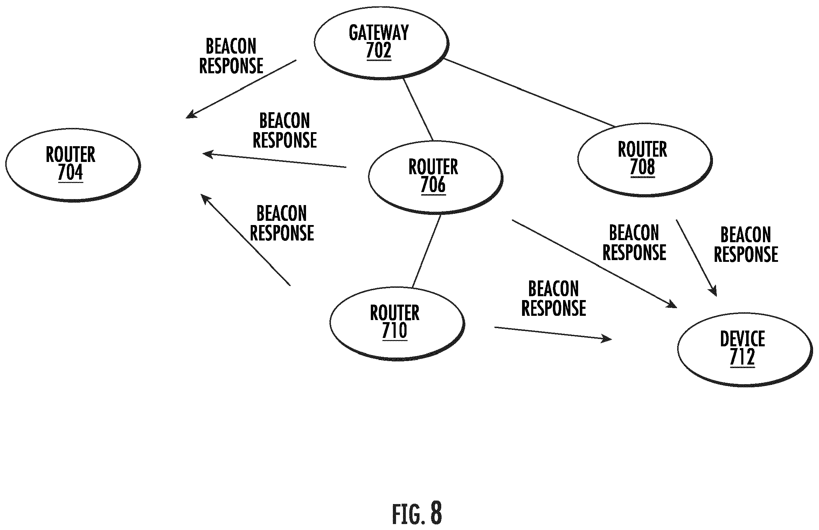

In some embodiments, subsequent to step 406, the example method proceeds to step 408, where the computing device generates a beacon response based on the available capability. The beacon response may comprise a message including an indication that the computing device has available capability or a value of the available capability. In some embodiments, subsequent to step 408, the example method proceeds to step 410, where the computing device transmits the beacon response to the broadcasting device. FIG. 8 depicts exemplary transmission of a beacon response, such as from gateway 702 to router 704.

Referring back to FIG. 4, in some embodiments, subsequent to step 410, the example method proceeds to step 412, where the computing device determines whether a joining request has been received from the broadcasting device. The joining request may comprise a request to connect with the computing device to join the tree network. In certain embodiments, the broadcasting device may be given a predetermined amount of time to respond. In some embodiments, subsequent to step 412, if a joining request is not received from the broadcasting device, the example method proceeds to step 404, where the computing device continues to monitor for additional beacon request broadcasts. According to another embodiment, the computing device may proceed to monitor for other beacon request broadcasts without determining whether a joining request has been received from the broadcasting device. That is, the computing device may advertise availability and fulfill joining requests on a first-come-first-served basis regardless of the timing in which beacon responses were transmitted by the computing device.

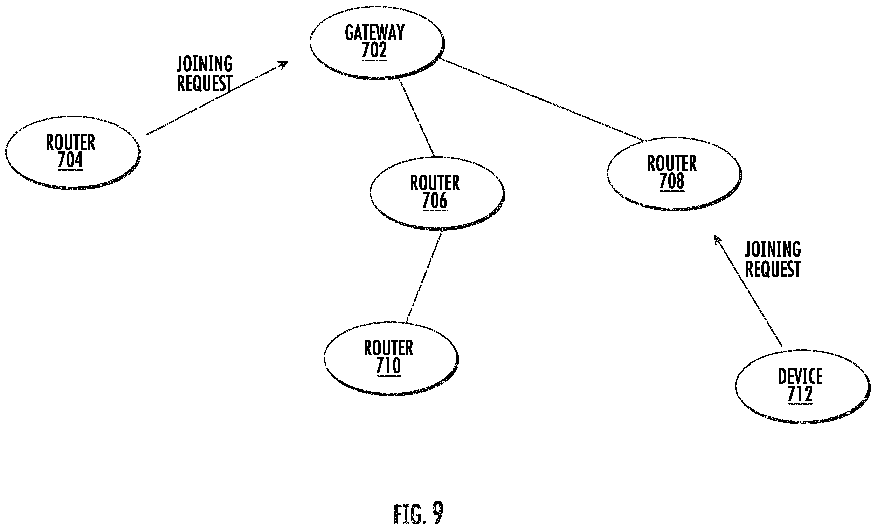

In some embodiments, subsequent to step 412, if a joining request is received from the broadcasting device, the example method proceeds to step 414, where the computing device establishes the broadcasting device as a child node device. FIG. 9 depicts exemplary receiving of joining requests. For example, a joining request from router 704 is received by gateway 702. Establishing the broadcasting device as a child node device may include allocating the computing device's capability to the child node device, assigning a network address to the child node device, and recording a media access control (MAC) address of the broadcasting device as a MAC address of the child node device.

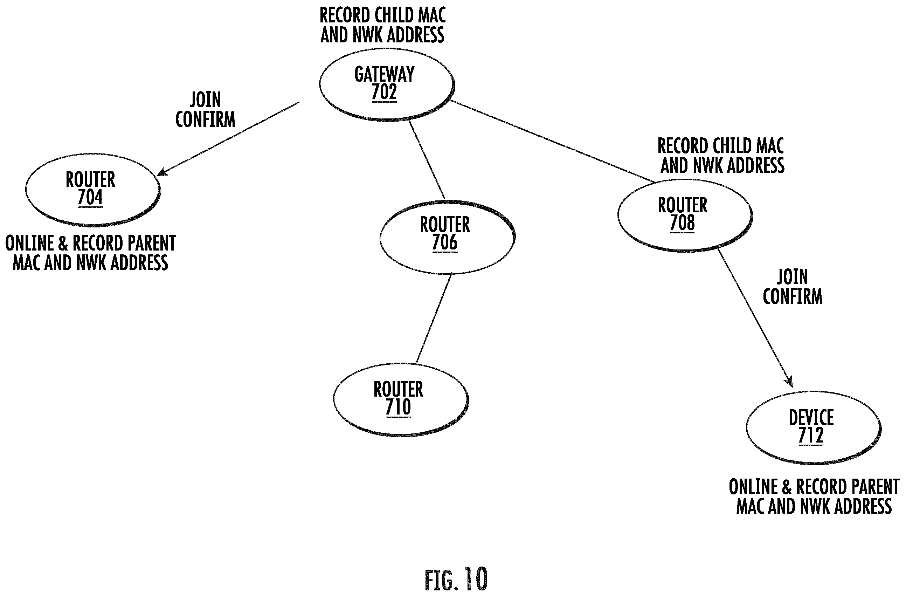

Referring back to FIG. 4, in some embodiments, subsequent to step 414, the example method proceeds to step 416, where computing device transmits a join confirmation to the broadcasting device based on the establishment of the broadcasting device as a child node device. The join confirmation may comprise a message that confirms connection to the tree network via a connection between the computing device and the broadcasting device. The join confirmation may include the assigned network address and a capability value representative of capability that is distributed from the computing device to the child node device. The capability value may be allocated to the child node device, which may determine whether the child node device (e.g., if the child node device is a router) is able to accept a connection with another child node device as a parent node device. As shown in FIG. 10, gateway 702 transmits a join confirmation to router 704.

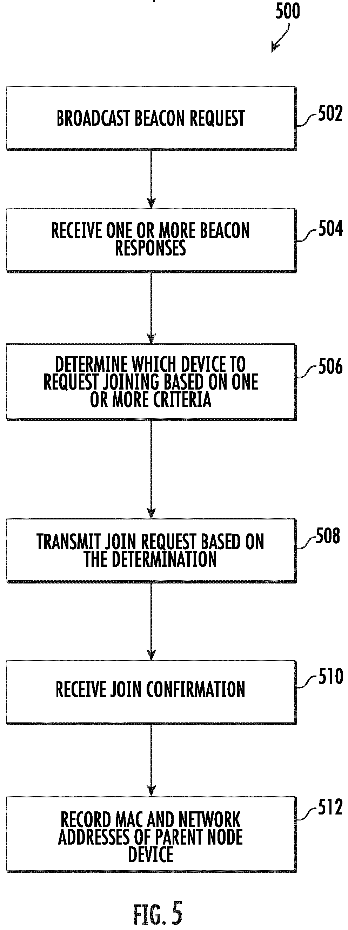

In FIG. 5, the example method 500 may be executed by a computing device associated with a gas detection device or a router for soliciting to join a tree network according to some embodiments of the present disclosure. At step 502, the computing device broadcasts a beacon request to search for a parent node device to connect with in order to join a tree network. For example, the computing device may comprise either a gas detection device or a router that is switching over from a parallel network configuration and searching for a parent node device to connect with in order to join the tree network. The parent node device may comprise a gateway, a router connected to a gateway, or a router connected to one or more additional routers that are connected to a gateway. The beacon request may comprise a request, from the computing device, for devices with available capability to connect with the computing device. The beacon request may be broadcasted to devices, for example, a gateway or routers within wireless communication range of the computing device. FIG. 7 presents an exemplary depiction of a router 704 broadcasting a beacon request to a plurality of devices including gateway 702, router 706, and router 710, and of a device 712 broadcasting a beacon request to a plurality of devices including router 706, router 708, and router 710.

In some embodiments, subsequent to step 502, the example method proceeds to step 504, where one or more beacon responses are received by the computing device. A beacon response may comprise a message including an indication that a given device in receipt of the beacon request has available capability. The computing device may receive a beacon response from any beacon responding device within transmission range of the computing device (e.g., a gateway, a router connected to a gateway, or a router connected to one or more additional routers that are connected to a gateway) and having capability to add the computing device as a child node device. For example, referring to FIG. 8, router 704 receives beacon responses from gateway 702, router 706, and router 710, and device 712 receives beacon responses from router 706, router 708, and router 710.

In some embodiments, subsequent to step 504, the example method proceeds to step 506, where the computing device determines which of beacon responding devices, corresponding to the one or more beacon responses, to request joining based on one or more criteria. The one or more criteria may include minimum number of hops, best received signal strength indicator (RSSI), and signal noise ratio (SNR). According to various embodiments, the minimum number of hops may be given high priority.

In some embodiments, subsequent to step 506, the example method proceeds to step 508, where the computing device transmits a joining request to a given beacon responding device based on the determination. The joining request may comprise a request to connect with the beacon responding device to join the tree network. That is, the joining request may be representative of a selection of the given beacon responding device as a parent node device. Beacon responses from beacon responding devices not requested for joining may be ignored and not selected for connection. FIG. 9 depicts exemplary transmission of a joining request from router 704 to gateway 702 and a joining request from device 712 to router 708.

In some embodiments, subsequent to step 508, the example method proceeds to step 510, where the computing device receives a join confirmation from the given beacon responding device. In certain embodiments, the computing device may resend the joining request to the given beacon responding device if a join confirmation has not been received from the given beacon responding device within a given period of time. According to another embodiment, the computing device may return to step 506 if a join confirmation has not been received from the given beacon responding device after resending of the joining request to the given beacon responding device.

The join confirmation may comprise a message that confirms a connection to the tree network via a connection between the computing device and the given beacon responding device. The join confirmation may include the assigned network address and a capability value representative of capability that is distributed from the given beacon responding device (parent node device) to the computing device. The capability value may be allocated to the computing device, which may determine whether the computing device is able to establish a connection with a child node device as a parent node device. Referring to FIG. 10, exemplary receipt of join confirmations is depicted by router 704 receiving a join confirmation from gateway 702, and device 712 receiving a join confirmation from router 708.

In some embodiments, subsequent to step 510, the example method proceeds to step 512, where the computing device records the MAC address and the network address of the given beacon responding device for association as a parent node device based on the join confirmation. For example, the computing device, now a child node device to the given beacon responding device serving as the parent node device, may use the MAC address and the network address of the given beacon responding device for communication and routing with the given beacon responding device. Referring to Fig. 10, upon receiving the join confirmation, the router 704 is connected to the tree network and record the MAC address and the network address of the gateway 702.

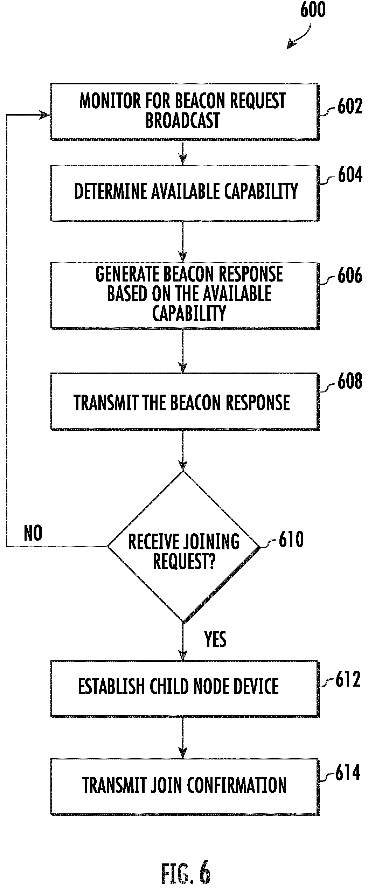

In FIG. 6, the example method 600 may be executed by a computing device associated with a router in a tree network for handling child node connection requests from broadcasting devices requesting to join a tree network according to some embodiments of the present disclosure. According to various embodiments described herewith, the requests to join the tree network may be in response to a detection of a gateway. As an example, the broadcasting devices may switch over from a parallel network configuration to a tree network configuration. In various embodiments, the router may be configured as a child node device connected to a parent node device. The parent node device may comprise a gateway, a router connected to a gateway, or a router connected to one or more additional routers that are connected to a gateway.

At step 602, the computing device monitors for a beacon request broadcast. The beacon request may comprise a request, from a broadcasting device, for devices with available capability to connect with the broadcasting device. Monitoring for the beacon request broadcast may comprise detecting a beacon request broadcast from a broadcasting device. A beacon request may be broadcasted from, for example, either a gas detection device or a router that is switching over from a parallel network configuration and searching for a parent node device to connect with in order to join the tree network.

FIG. 7 presents examples of routers monitoring for beacon request broadcasts. As shown in the illustrated embodiment, router 706, router 708, and router 710 are configured to monitor for beacon requests. Beacon requests may be detected by router 706, router 708, and router 710 based on factors, such as distance, broadcast signal strength, and signal noise. Router 706 and router 710 are able to receive beacon requests broadcasted from router 704 and device 712, while router 708 is only able to receive a beacon request broadcasted from device 712.

Referring back to FIG. 6, in some embodiments, subsequent to step 602, the example method proceeds to step 604, where the computing device determines available capability to support a connection with the broadcasting device. Capability may comprise a resource quantity representative of the computing device's (router's) capacity for accepting child node device connections. The computing device may be allocated a given amount of capability (e.g., from a parent node device) which may be further allocated from the computing device to child node devices. Determining available capability may further comprise determining a child node device type corresponding to the broadcasting device. Different types of child node devices may require different amounts of capability. For example, a connection with a router may require greater capability from the computing device than a gas detection device.

In some embodiments, subsequent to step 604, the example method proceeds to step 606, where the computing device generates a beacon response based on the available capability. The beacon response may comprise a message including an indication that the computing device has available capability or a value of the available capability. In some embodiments, subsequent to step 606, the example method proceeds to step 608, where the computing device transmits the beacon response to the broadcasting device. FIG. 8 depicts exemplary transmission of beacon responses. Router 706 and router 720 transmit beacon responses to router 704 and device 712, and router 708 transmits a beacon response to device 712.

Referring back to FIG. 6, in some embodiments, subsequent to step 608, the example method proceeds to step 610, where the computing device determines whether a joining request has been received from the broadcasting device. The joining request may comprise a request to connect with the computing device to join the tree network. FIG. 9 depicts exemplary receiving of a joining request by router 708 from device 712.

In certain embodiments, the broadcasting device may be given a predetermined amount of time to respond. In some embodiments, subsequent to step 610, if a joining request is not received from the broadcasting device, the example method proceeds to step 602, where the computing device continues to monitor for additional beacon request broadcasts. According to another embodiment, the computing device may proceed to monitor for other beacon request broadcasts without determining whether a joining request has been received from the broadcasting device. That is, the computing device may advertise availability and fulfill joining requests on a first-come-first-served basis regardless of the timing in which beacon responses were transmitted by the computing device.

In some embodiments, subsequent to step 610, if a joining request is received from the broadcasting device, the example method proceeds to step 612, where the computing device establishes the broadcasting device as a child node device. Establishing the broadcasting device as a child node device may include allocating the computing device's capability to the child node device, assigning a network address to the child node device, and recording a media access control (MAC) address of the broadcasting device as a MAC address of the child node device.

Referring back to FIG. 6, in some embodiments, subsequent to step 612, the example method proceeds to step 614, where computing device transmits a join confirmation to the broadcasting device based on the establishment of the broadcasting device as a child node device. The join confirmation may comprise a message that confirms connection to the tree network via a connection between the computing device and the broadcasting device. The join confirmation may include the assigned network address and a capability value representative of capability that is distributed from the computing device to the child node device. The capability value may be allocated to the child node device, which may determine whether the child node device (e.g., if the child node device is a router) is able to accept a connection with another child node device as a parent node device. As shown in FIG. 10, router 708 transmits a join confirmation to device 712.

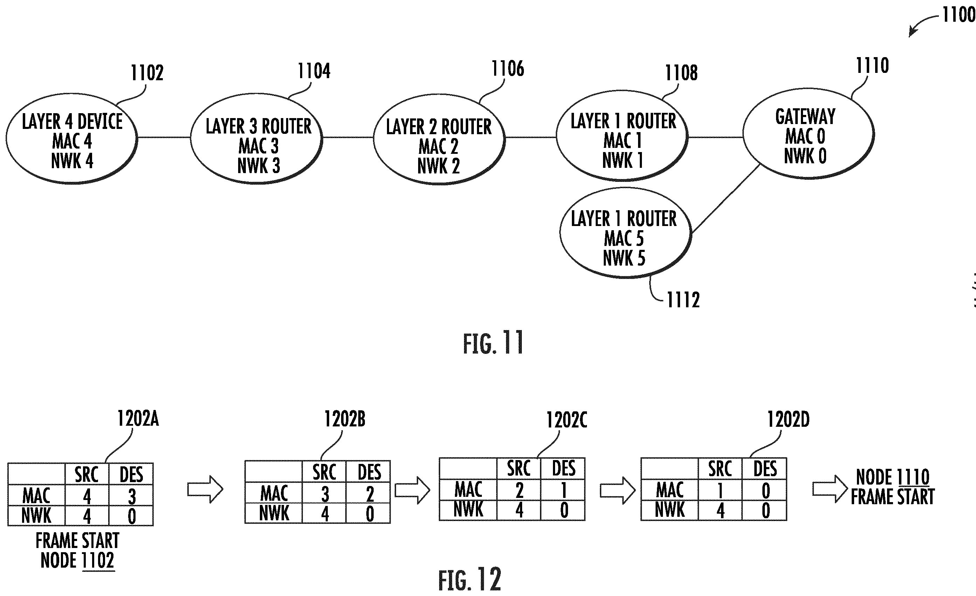

FIG. 11 presents a tree network diagram of exemplary node addresses for data transmission and routing according to various embodiments of the present disclosure. A tree network 1100 comprises a plurality of nodes belonging to a plurality of layers, Layers 0 through 4. Node 1102 comprises a gas detection device on layer 4 including a MAC address of '4' and a network address of '4'. Node 1104 comprises a router on layer 3 including a MAC address of '3' and a network address of '3'. Node 1106 comprises a router on layer 2 including a MAC address of '2' and a network address of '2'. Node 1108 comprises a router on layer 1 including a MAC address of '1' and a network address of '1'. Node 1110 comprises a gateway on layer 0 including a MAC address of '0' and a network address of '0'. Node 1112 comprises a router on layer 1 including a MAC address of '5' and a network address of '5'. Node 1110 may comprise a root node device that is designated as a destination of data communications from all node devices within tree network 1100. As an example, node 1110 may function as a destination device node where child node devices may communicate data to, either directly or via intermediate device nodes.

Data from a given node may be transmitted to a destination node. Frames may be transmitted between nodes of tree network 1100 to facilitate the data transmission. A frame may comprise a data transmission unit including control information and a data payload. In some embodiments, the given node may need to forward a frame to one or more intermediate nodes in order to send data to a destination node.

FIG. 12 presents exemplary upstream transmission frames according to various embodiments of the present disclosure. Frames 1202A, 1202B, 1202C, and 1202D represent control information portions of a frame transmitted upstream through a plurality of nodes from node 1102 to node 1110. Each frame may include a "NWK" value for "SRC" denoting a network address of an originating source node of the frame and a "NWK" value for "Des" denoting a network address of a destination of the frame. The "Des" value for "NWK" may be used by a recipient node of a frame to determine a next node to transmit the frame to reach a node having a "NWK" equal to "Des." The "SRC" value for "NWK" may be used by a destination node to determine an origination of a frame. A frame may further include a "MAC" value for "SRC" denoting a MAC address of a current node transmitting the frame and a "MAC" value for "Des" denoting a MAC address of a node the current node is transmitting the frame to.

Node 1102 may communicate data to node 1110 by transmitting a frame through nodes 1104, 1106, and 1108. The node 1102 generates a frame 1202A. Frame 1202A includes a "SRC" value of '4' (corresponding to node 1110) and a "Des" value of '0' for "NWK" (corresponding to node 1102. The "Des" value for "NWK" may be used by a receiving node of frame 1202A to determine a next node to transmit the frame 1202A in order to reach a destination node having a "NWK" value equal to the "Des" value (e.g., node 1110 having a "NWK" value of '0'). The "SRC" value for "NWK" may be used by the destination node (node 1110) of the frame 1202A to identify node 1102 (having a "NWK" value of 4) as the source of the frame 1202A. Frame 1202A also includes a "SRC" value of '4' and a "Des" value of '3' for "MAC" corresponding to a transmission of the frame 1202A from node 1102 (having a "MAC" of '4') to node 1104 (having a "MAC" of '3'). Node 1102 transmits frame 1202A to node 1104.

Node 1104 receives the frame 1202A and identifies '0' as the "Des" value for "NWK." Based on the identification, node 1104 modifies frame 1202A into frame 1202B by changing the "SRC" of the "MAC" to '3' (associated with the current node 1104) and "Des" of the "MAC" to '2' (associated with node 1106) for a next hop to reach node 1110. Frame 1202B is subsequently transmitted to node 1106.

Node 1106 receives the frame 1202B and identifies '0' as the "Des" value for "NWK." Based on the identification, node 1106 modifies frame 1202B into frame 1202C by changing the "SRC" of the "MAC" to '2' (associated with the current node 1106) and "Des" of the "MAC" to '1' (associated with node 1108) for a next hop to reach node 1110. Frame 1202C is subsequently transmitted to node 1108.

Node 1108 receives the frame 1202C and identifies '0' as the "Des" value for "NWK." Based on the identification, node 1108 modifies frame 1202C into frame 1202D by changing the "SRC" of the "MAC" to '1' (associated with the current node 1108) and "Des" of the "MAC" to '0' (associated with node 1110) which is the destination node. Frame 1202D is subsequently transmitted to node 1110.

When a node receives a frame not directly from its child node, it may record the "SRC" value of "NWK" as a branch of a node corresponding to the "SRC" value of "MAC" from the frame. For example, node 1110 may record NWK '4' as node 1108's branch, node 1108 may record NWK '4' as node 1106's branch, and node 1106 may record NWK '4' as node's 1104 branch. The recorded branches can used for downstream frame routing.

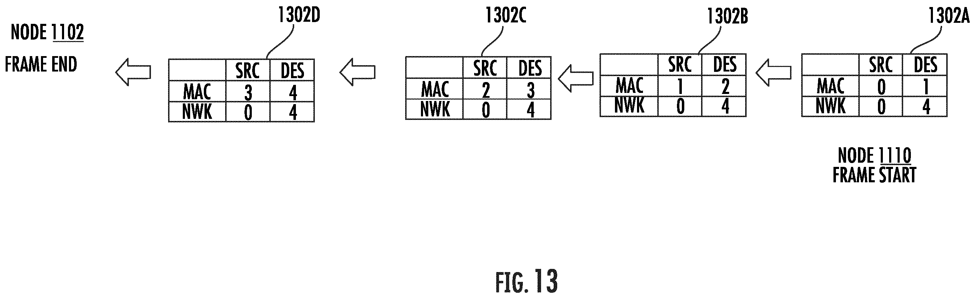

FIG. 13 presents exemplary downstream transmission frames according to various embodiments of the present disclosure. Frames 1302A, 1302B, 1302C, and 1302D represent control information portions of a frame transmitted downstream through a plurality of nodes from node 1110 to node 1102. For downstream data communication, a node may search for the "Des" value of "NWK" in its list of child nodes and branches to identify a value for "Des" of "MAC" for transmitting a frame. According to the illustrated example, node 1110 generates a frame 1302A for transmission to node 1102. Frame 1302A includes a "SRC" value of '0' (corresponding to node 1110) and a "Des" value of '4' for "NWK" (corresponding to node 1102). Node 1110 may determine that "Des" value of '4' for "NWK" is a branch of node 1108 and assigns "Des" value of '1' to "MAC" of frame 1302A. Node 1110 transmits frame 1302A to node 1108.

Node 1108 receives the frame 1302A and may determine that "Des" value of '4' for "NWK" is a branch of node 1106 and assigns "Des" value of '2' to "MAC" and creates frame 1302B. Node 1108 transmits frame 1302B to node 1106.

Node 1106 receives the frame 1302B and may determine that "Des" value of '4' for "NWK" is a branch of node 1104 and assigns "Des" value of '3' to "MAC" and creates frame 1302C. Node 1106 transmits frame 1302C to node 1104.

Node 1104 receives the frame 1302C and may determine that "Des" value of '4' for "NWK" is a child node and assigns "Des" value of '4' to "MAC" and creates frame 1302D. Node 1104 transmits frame 1302D to node 1102.

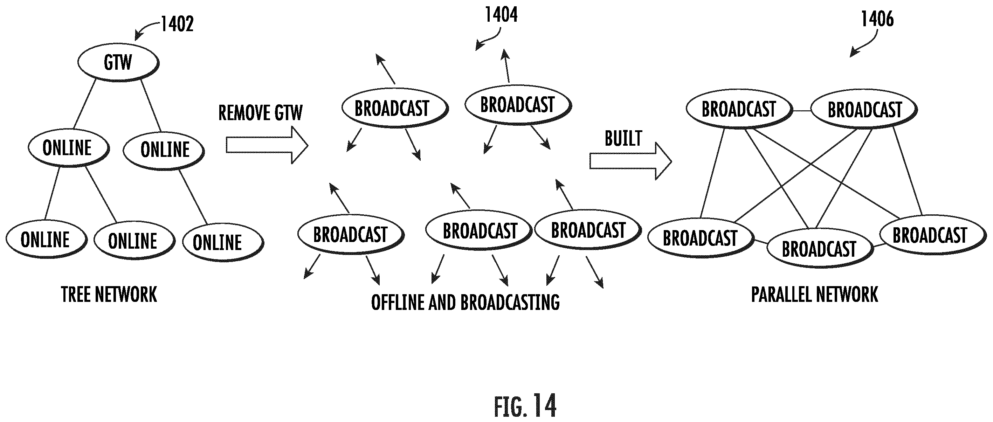

FIG. 14 presents a diagram of exemplary network mode switching according to various embodiments of the present disclosure. Node devices within tree network 1402 may automatically switch over to operate in a parallel network 1406 upon removal of a gateway from tree network 1402. Removal of a gateway from tree network 1402 may result for various reasons, such as being out of range from all the devices within the tree network 1402, offline, or loss of connectivity. Upon removal of the gateway from tree network 1402, node devices may go offline and switch over to broadcasting (1404) in order to create parallel network 1406.

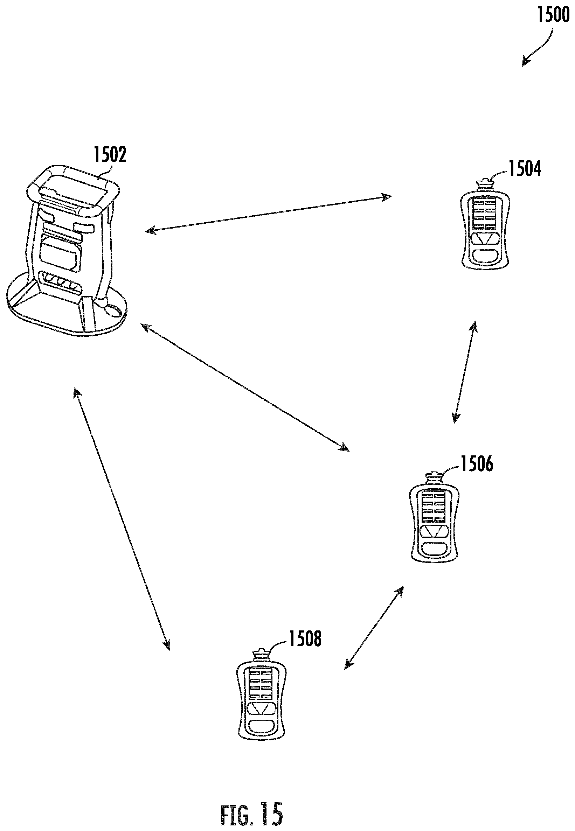

FIG. 15 presents an example gas detection system configured in a parallel network according to some embodiments of the present disclosure. A gas detection system 1500 is depicted. The gas detection system 1500 includes devices 1502, 1504, 1506, and 1508 that are communicating in parallel network. The 1502, 1504, 1506, and 1508 may comprise gas detection devices, routers, or a combination thereof.

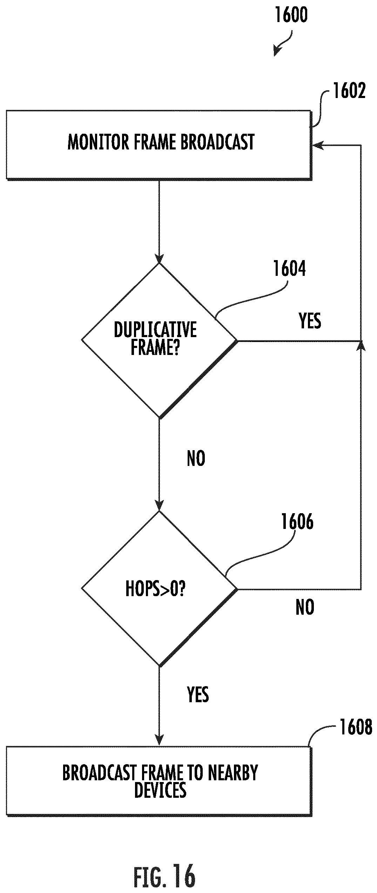

FIG. 16 presents an example flow diagram illustrating an exemplary method of handling frame broadcasts from frame broadcasting devices requesting to join a parallel network according to some embodiments of the present disclosure. According to various embodiments described herewith, the requests to join the parallel network may be in response to loss or removal of a gateway from an existing tree network. As an example, the broadcasting devices may switch over from a tree network configuration to a parallel network configuration.

In FIG. 16, the example method 1600 may be executed by a computing device associated with a gas detection device or a router in the parallel network. At step 1602, monitors for frame broadcasts. A frame broadcast may comprise a transmission of a frame including control information and a data payload for distribution among devices within the parallel network. The frame may be broadcasted from, for example, either a gas detection device or a router to nearby devices that are able to receive the frame.

In some embodiments, subsequent to step 1602, the example method proceeds to step 1604, where the computing device determines whether a given broadcasted frame is duplicative. Determining whether the frame is duplicative may include comparing control information and data payload of the given broadcasted frame with previous frames received by the computing device. In some embodiments, if the frame is duplicative, the computing device monitors for other frame broadcasts at step 1602. Non-duplicative frames may be stored or processed by the computing device according to application-specific functions that may be executed by the computing device. For example, data payload from the frame may be accessed and rendered for display or used to generate alarms in gas-detection applications.

In some embodiments, subsequent to step 1604, if the frame is not duplicative, the example method proceeds to step 1606, where the computing device determines whether the amount of hops associated with the frame is greater than '0'. The amount of hops may be included in each frame and reduced by '1' after each relay of the frame to another device. In some embodiments, if the amount of hops is not greater than '0', the computing device monitors for other frame broadcasts at step 1602. In some embodiments, subsequent to step 1606, if the amount of hops is greater than '0', the example method proceeds to step 1608, where the computing device broadcasts the frame to nearby devices.

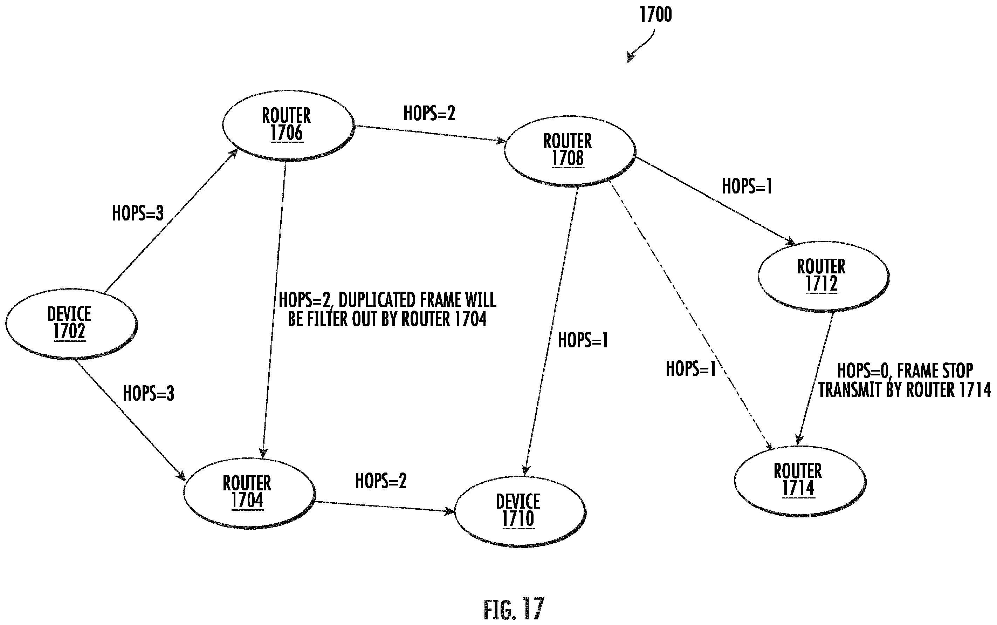

FIG. 17 presents a diagram of broadcasting devices in a parallel network according to various embodiments of the present disclosure. Parallel network 1700 comprises device 1702, device 1710, router 1704, router 1706, router 1708, router 1712, and router 1714. In the illustrated embodiment, a gateway is omitted from parallel network 1700 and as such, data communications are relayed among device 1702, device 1710, router 1704, router 1706, router 1708, router 1712, and router 1714.

For example, a frame from a device or router can be broadcasted and relayed to other nearby devices or routers. In particular, a given device or router may originate a frame and set a maximum number of hops the frame can be relayed. Every time the frame is relayed, the number of allowed hops for the frame may be subtracted by '1'. The frame may continue to be relayed until the number of allowed hops associated with the frame is exhausted (e.g., hops = '0'). Routers may also filter duplicated frames. For example, router 1704 receives a frame broadcasted from device 1702 and also receives the same frame relayed from router 1706. In this case, router 1704 filters out the duplicative frame that has made the most hops or the least amount of allowed hops (i.e., the frame received from router 1706). Similarly, a frame transmitted from router 1708 to 1710 with hops = '1' is duplicative of a frame transmitted from 1704 with hops = '2', and a frame transmitted from router 1712 to router 1714 with hops = '0' is duplicative of a frame transmitted from router 1708 to router 1714 with hops = '1'. The duplicative frames including the least amount of allowed hops may be filtered out. Once the frame has reached router 1714, the amount of hops may be reduced to '0' and the frame is no longer relayed from router 1714.

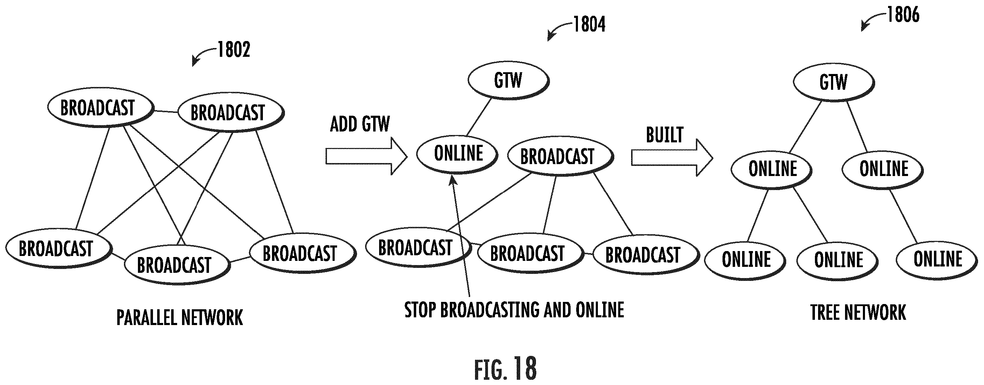

FIG. 18, presents a diagram of exemplary network mode switching according to various embodiments of the present disclosure. Node devices within parallel network 1802 may automatically switch over to operate in a tree network 1806 upon the addition or introduction of a gateway to parallel network 1802. Upon adding a gateway to parallel network 1802, node devices may stop broadcasting (1804) start connecting to the gateway and build the tree network 1806 as described with reference to FIGs. 4 through 10.

As described above and as will be appreciated based on this disclosure, embodiments of the present disclosure may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

It is to be understood that the disclosure is not to be limited to the specific embodiments disclosed. Although specific terms are employed herein, they are used in a generic and descriptive sense only and not for purposes of limitation, unless described otherwise.

## Claims

1. A method for establishing a tree network of devices within a gas detection system, the gas detection system comprising one or more broadcasting devices, and a gateway, the method comprising:
initializing the gateway as a root node of a tree network (402);
monitoring, by the gateway, for a beacon request broadcast, wherein the beacon request broadcast is detected by the gateway from a given one of the one or more broadcasting devices, the given broadcasting device switching over from a parallel network configuration to join the tree network, and wherein the beacon request comprises a request for devices within the gas detection system with available capability to connect with the broadcasting device;
determining, by the gateway, available capability to support a connection with the broadcasting device;
generating, by the gateway, a beacon response based on the determination of available capability;
transmitting, by the gateway, the beacon response to the broadcasting device;
establishing, by the gateway, the broadcasting device as a child node device based upon a receipt of a joining request; and
transmitting, by the gateway, a join confirmation to the broadcasting device based on the establishment of the broadcasting device as a child node device.

2. The method of claim 1, wherein the root node comprises a node device designated as a destination of data communications from child node devices in the tree network.

3. The method of claim 1, wherein the tree network comprises a long range, LoRa, private network.

4. The method of claim 1, further comprising connecting the tree network to a central network.

5. The method of claim 1, wherein the availability capability comprises a resource quantity representative of the gateway's capacity for accepting child node device connections.

6. The method of claim 1, wherein determining the available capability further comprises determining a child node device type corresponding to the broadcasting device.

7. The method of claim 1, wherein establishing the broadcasting device as a child node device further comprises:
allocating the gateway's capability to the child node device;
assigning a network address to the child node device; and
recording a media access control, MAC, address of the broadcasting device as a MAC address of the child node device.

8. The method of claim 1, wherein the join confirmation includes an assigned network address and a capability value representative of capability distributed from the gateway to the child node device.

9. A method for joining a tree network of devices within a gas detection system, the gas detection system comprising one or more broadcasting devices, and one or more broadcast beacon responding devices, the method comprising:
broadcasting, by a broadcasting device, a beacon request upon switching over from a parallel network configuration to join a tree network, wherein the beacon request comprises a request for devices within the gas detection system with available capability to connect with the broadcasting device;
receiving, by the broadcasting device, one or more beacon responses comprising a message including an indication that a beacon responding device in receipt of the beacon request has available capability;
determining, by the broadcasting device, which beacon responding device, corresponding to the one or more beacon responses, to request joining based on one or more criteria;
transmitting, by the broadcasting device, a joining request to a beacon responding device based on the determination;
receiving, by the broadcasting device, a join confirmation from the beacon responding device which received the joining request; and
recording a media access control, MAC, address and a network address of the beacon responding device for association as a parent node device based on the join confirmation.

10. The method of claim 9, wherein the beacon responding device comprises a gateway, a router connected to a gateway, or a router connected to one or more additional routers connected to the gateway.

11. The method of claim 9, wherein the one or more criteria include minimum number of hops, best received signal strength indicator, RSSI, or signal noise ratio, SNR.

12. The method of claim 9, wherein the joining request comprises a request to connect with the beacon responding device to join the tree network.

13. The method of claim 9, where the join confirmation comprises a message confirming a connection to the tree network via a connection between the broadcasting device and the beacon responding device.

## Patentansprüche

1. Verfahren zum Einrichten eines Baumnetzwerks von Vorrichtungen innerhalb eines Gasdetektionssystems, das Gasdetektionssystem umfassend eine oder mehrere Übertragungsvorrichtungen und ein Gateway, das Verfahren umfassend:
Initialisieren des Gateways als einen Stammknoten eines Baumnetzwerks (402);
Überwachen, durch das Gateway, auf eine Übertragung einer Beacon-Anforderung, wobei die Übertragung der Beacon-Anforderung durch das Gateway von einer vorgegebenen der einen oder der mehreren Übertragungsvorrichtungen detektiert wird, wobei die vorgegebene Übertragungsvorrichtung aus einer parallelen Netzwerkkonfiguration wechselt, um dem Baumnetzwerk beizutreten, und wobei die Beacon-Anforderung eine Anforderung für Vorrichtungen innerhalb des Gasdetektionssystems mit einer verfügbaren Fähigkeit, sich mit der Übertragungsvorrichtung zu verbinden, umfasst;
Bestimmen, durch das Gateway, einer verfügbaren Fähigkeit, eine Verbindung mit der Übertragungsvorrichtung zu unterstützen;
Erzeugen, durch das Gateway, einer Beacon-Antwort auf Basis der Bestimmung der verfügbaren Fähigkeit;
Senden, durch das Gateway, der Beacon-Antwort an die Übertragungsvorrichtung;
Einrichten, durch das Gateway, der Übertragungsvorrichtung als eine Kindknoten-Vorrichtung auf Basis eines Empfangs einer Beitrittsanforderung; und
Senden, durch das Gateway, einer Beitrittsbestätigung an die Übertragungsvorrichtung auf Basis der Einrichtung der Übertragungsvorrichtung als eine Kindknoten-Vorrichtung.

2. Verfahren nach Anspruch 1, wobei der Stammknoten eine Knotenvorrichtung umfasst, die als ein Ziel von Datenkommunikationen von Kindknoten-Vorrichtungen in dem Baumnetzwerk benannt ist.

3. Verfahren nach Anspruch 1, wobei das Baumnetzwerk ein privates Long-Range-, LoRa-, Netzwerk umfasst.

4. Verfahren nach Anspruch 1, ferner umfassend das Verbinden des Baumnetzwerks mit einem zentralen Netzwerk.

5. Verfahren nach Anspruch 1, wobei die Verfügbarkeitsfähigkeit eine Ressourcenmenge umfasst, die bezeichnend für die Fähigkeit des Gateways ist, Verbindungen der Kindknoten-Vorrichtung zu akzeptieren.

6. Verfahren nach Anspruch 1, wobei das Bestimmen der verfügbaren Fähigkeit ferner das Bestimmen eines Typs der Kindknoten-Vorrichtung umfasst, der der Übertragungsvorrichtung entspricht.

7. Verfahren nach Anspruch 1, wobei das Einrichten der Übertragungsvorrichtung als eine Kindknoten-Vorrichtung ferner Folgendes umfasst:
Zuordnen der Fähigkeit des Gateways zu der Kindknoten-Vorrichtung;
Zuweisen einer Netzwerkadresse zu der Kindknoten-Vorrichtung; und
Aufzeichnen einer Media-Access-Control-, MAC-, Adresse an die Übertragungsvorrichtung als eine MAC-Adresse der Kindknoten-Vorrichtung.

8. Verfahren nach Anspruch 1, wobei die Beitrittsbestätigung eine zugewiesene Netzwerkadresse und einen Fähigkeitswert beinhaltet, der bezeichnend ist für die von dem Gateway der Kindknoten-Vorrichtung zugeteilte Fähigkeit.

9. Verfahren zum Beitreten zu einem Baumnetzwerk von Vorrichtungen innerhalb eines Gasdetektionssystems, das Gasdetektionssystem umfassend eine oder mehrere Übertragungsvorrichtungen und eine oder mehrere Übertragungs-Beacon-Antwortvorrichtungen, das Verfahren umfassend:
Übertragen, durch eine Übertragungsvorrichtung, einer Beacon-Anforderung bezüglich des Wechselns aus einer parallelen Netzwerkkonfiguration, um einem Baumnetzwerk beizutreten, wobei die Beacon-Anforderung eine Anforderung für Vorrichtungen innerhalb des Gasdetektionssystems mit einer verfügbaren Fähigkeit, sich mit der Übertragungsvorrichtung zu verbinden, umfasst;
Empfangen, durch die Übertragungsvorrichtung, einer oder mehrerer Beacon-Antworten, die eine Nachricht umfassen, die eine Angabe beinhaltet, dass eine Beacon-Antwortvorrichtung, die die Beacon-Anforderung empfangen hat, eine verfügbare Fähigkeit aufweist;
Bestimmen, durch die Übertragungsvorrichtung, welche Beacon-Antwortvorrichtung entsprechend der einen oder den mehreren Beacon-Antworten auf Basis eines oder mehrerer Kriterien für einen Beitritt angefordert werden soll;
Senden, durch die Übertragungsvorrichtung, einer Beitrittsanforderung an eine Beacon-Antwortvorrichtung auf Basis der Bestimmung;
Empfangen, durch die Übertragungsvorrichtung, einer Beitrittsbestätigung von der Beacon-Antwortvorrichtung, die die Beitrittsanforderung empfangen hat; und
Aufzeichnen einer Media-Access-Control-, MAC-, Adresse und einer Netzwerkadresse der Beacon-Antwortvorrichtung zum Anschließen als eine Elternknoten-Vorrichtung auf Basis der Beitrittsbestätigung.

10. Verfahren nach Anspruch 9, wobei die Beacon-Antwortvorrichtung ein Gateway, einen mit dem Gateway verbundenen Router oder einen mit einen oder mehreren weiteren mit dem Gateway verbundenen Routern verbundenen Router umfasst.

11. Verfahren nach Anspruch 9, wobei das eine oder die mehreren Kriterien eine Mindestanzahl von Hops, einen Indikator der am besten empfangen Signalstärke, RSSI, oder ein Signal-Rausch-Verhältnis, SNR, beinhaltet.

12. Verfahren nach Anspruch 9, wobei die Beitrittsanforderung eine Anforderung dazu umfasst, sich mit der Beacon-Antwortvorrichtung zu verbinden, um dem Baumnetzwerk beizutreten.

13. Verfahren nach Anspruch 9, wobei die Beitrittsbestätigung eine Nachricht umfasst, die eine Verbindung zu dem Baumnetzwerk über eine Verbindung zwischen der Übertragungsvorrichtung und der Beacon-Antwortvorrichtung bestätigt.

## Revendications

1. Procédé d'établissement d'un réseau arborescent de dispositifs au sein d'un système de détection de gaz, le système de détection de gaz comprenant un ou plusieurs dispositifs de diffusion et une passerelle, le procédé comprenant :
l'initialisation de la passerelle en tant que nœud racine d'un réseau arborescent (402) ;
la surveillance, par la passerelle, d'une diffusion de demande de balise, dans laquelle la diffusion de demande de balise est détectée par la passerelle à partir d'un dispositif de diffusion donné parmi les un ou plusieurs dispositifs de diffusion, le dispositif de diffusion donné commutant d'une configuration de réseau parallèle pour rejoindre le réseau arborescent, et dans lequel la demande de balise comprend une demande de dispositifs au sein du système de détection de gaz avec une capacité disponible pour se connecter au dispositif de diffusion ;
la détermination, par la passerelle, de la capacité disponible pour prendre en charge une connexion au dispositif de diffusion ;
la génération, par la passerelle, d'une réponse de balise sur la base de la détermination de la capacité disponible ;
la transmission, par la passerelle, de la réponse de balise au dispositif de diffusion ;
l'établissement, par la passerelle, du dispositif de diffusion en tant que dispositif de nœud enfant sur la base de la réception d'une demande de liaison ; et
la transmission, par la passerelle, d'une confirmation de liaison au dispositif de diffusion sur la base de l'établissement du dispositif de diffusion en tant que dispositif de nœud enfant.

2. Procédé selon la revendication 1, dans lequel le nœud racine comprend un dispositif de nœud désigné comme une destination de communications de données provenant de dispositifs de nœuds enfants dans le réseau arborescent.

3. Procédé selon la revendication 1, dans lequel le réseau arborescent comprend un réseau privé longue portée, LoRa.

4. Procédé selon la revendication 1, comprenant en outre la connexion du réseau arborescent à un réseau central.

5. Procédé selon la revendication 1, dans lequel la capacité disponible comprend une quantité de ressources représentative de la capacité de la passerelle à accepter des connexions de dispositifs de nœuds enfants.

6. Procédé selon la revendication 1, dans lequel la détermination de la capacité disponible comprend en outre la détermination d'un type de dispositif de nœud enfant correspondant au dispositif de diffusion.

7. Procédé selon la revendication 1, dans lequel l'établissement du dispositif de diffusion en tant que dispositif de nœud enfant comprend en outre :
l'affectation de la capacité de la passerelle au dispositif de nœud enfant ;
l'attribution d'une adresse réseau au dispositif de nœud enfant ; et
l'enregistrement d'une adresse de contrôle d'accès au support, MAC, du dispositif de diffusion en tant qu'adresse MAC du dispositif de nœud enfant.

8. Procédé selon la revendication 1, dans lequel la confirmation de liaison inclut une adresse réseau attribuée et une valeur de capacité représentative d'une capacité distribuée de la passerelle au dispositif de nœud enfant.

9. Procédé de liaison à un réseau arborescent de dispositifs au sein d'un système de détection de gaz, le système de détection de gaz comprenant un ou plusieurs dispositifs de diffusion et un ou plusieurs dispositifs de réponse de balise de diffusion, le procédé comprenant :
la diffusion, par un dispositif de diffusion, d'une demande de balise lors d'une commutation d'une configuration de réseau parallèle pour rejoindre un réseau arborescent, dans laquelle la demande de balise comprend une demande de dispositifs au sein du système de détection de gaz avec une capacité disponible pour se connecter au dispositif de diffusion ;
la réception, par le dispositif de diffusion, d'une ou plusieurs réponses de balise comprenant un message incluant une indication qu'un dispositif de réponse de balise recevant la demande de balise a une capacité disponible ;
la détermination, par le dispositif de diffusion, du dispositif de réponse de balise, correspondant aux une ou plusieurs réponses de balise, auquel faire la demande de liaison sur la base d'un ou de plusieurs critères ;
la transmission, par le dispositif de diffusion, d'une demande de liaison à un dispositif de réponse de balise sur la base de la détermination ;
la réception, par le dispositif de diffusion, d'une confirmation de liaison du dispositif de réponse de balise qui a reçu la demande de liaison ; et
l'enregistrement d'une adresse de contrôle d'accès au support, MAC et d'une adresse réseau du dispositif de réponse de balise pour association en tant que dispositif de nœud parent sur la base de la confirmation de liaison.

10. Procédé selon la revendication 9, dans lequel le dispositif de réponse de balise comprend une passerelle, un routeur connecté à une passerelle ou un routeur connecté à un ou plusieurs routeurs supplémentaires connectés à la passerelle.

11. Procédé selon la revendication 9, dans lequel les un ou plusieurs critères incluent le nombre minimum de sauts, le meilleur indicateur de force du signal reçu, RSSI ou le rapport signal/bruit, SNR.

12. Procédé selon la revendication 9, dans lequel la demande de liaison comprend une demande de connexion au dispositif de réponse de balise pour rejoindre le réseau arborescent.

13. Procédé selon la revendication 9, dans lequel la confirmation de liaison comprend un message confirmant une connexion au réseau arborescent via une connexion entre le dispositif de diffusion et le dispositif de réponse de balise.
